# EUROPÄISCHE PATENTANMELDUNG

(11) **EP 1 882 852 A1**
(43) Veröffentlichungstag der Anmeldung: **30.01.2008**
(21) Anmeldenummer: 07011428.5
(22) Anmeldetag: 12.06.2007
(51) Int. Cl.: F03D 7/02, F03D 11/00

(54) **Windenergieanlage mit einem Maschinenhaus**

(30) Priorität: 28.06.2006 DE 102006029640
(71) Anmelder: NORDEX ENERGY GmbH, 22848 Norderstedt (DE)
(72) Erfinder: Behnke, Merten, 23974 Alt Farpen (DE); Keller, Harald, 22763 Hamburg (DE); Nitzpon, Joachim, 20255 Hamburg (DE)
(74) Vertreter: Schildberg, Peter

(57) **Zusammenfassung**

Windenergieanlage mit einem Maschinenhaus und einem Rotor mit mindestens einem um seine Längsachse verstellbaren Rotorblatt, wobei eine Verstelleinrichtung vorgesehen ist, über die eine Azimutausrichtung des Maschinenhauses oder eine Pitchausrichtung des mindestens einen Rotorblatts motorisch einstellbar ist, die Verstelleinrichtung weist mindestens einen Motor auf, wobei eine Steuerung für den Motor vorgesehen ist, die das auftretende Moment an dem Motor auf einen vorbestimmten Maximalwert begrenzt.

## Beschreibung

Die Erfindung betrifft eine Windenergieanlage, die ein Maschinenhaus besitzt, dessen Ausrichtung über eine Verstelleinrichtung motorisch einstellbar ist.

Die motorische Windrichtungsnachführung des Maschinenhauses für eine Windenergieanlage ist allgemein bekannt. Laut Erich Hau, Windkraftanlagen, 3. Auflage, Springer-Verlag, Seite 309ff., wird die Windrichtungsnachführung auch als Azimutverstellsystem bezeichnet. Die grundlegende Aufgabe dieses Systems wird darin gesehen, den Rotor und das Maschinenhaus automatisch nach der Windrichtung auszurichten. E. Hau erläutert hierzu, daß die Windrichtungsnachführung eine selbständige Baugruppe in der Windenergieanlage sei, die vom konstruktiven Standpunkt aus gesehen, den Übergang vom Maschinenhaus zum Turmkopf bildet. Vereinfacht gesprochen, dreht die Verstelleinrichtung das Maschinenhaus mit dem Rotor um die Längsachse des Turms. Bei der Verstelleinrichtung kann einerseits der Stellantrieb und andererseits eine Bremszange oder Drehhemmung unterschieden werden. Der Stellantrieb weist einen Motor, ein Getriebe und eine Elektrobremse auf.

Aus DE 199 20 504 C2 ist ein Nachführsystem für eine Windenergieanlage bekannt. Bei dem Windrichtungsnachführsystem erzeugt der Stellantrieb während der Stillstandszeit des Maschinenhauses zeitweise oder kontinuierlich ein Haltemoment an der Verstelleinrichtung. Erreicht wird dies, indem als Stellantrieb ein Drehstrom-Asynchronmotor vorgesehen ist, der zur Erzeugung eines Haltemoments mit einem Gleichstrom beaufschlagt wird.

Aus DE 100 23 440 C1 ist ein Windrichtungsnachführsystem bekannt, bei dem der Stellantrieb während der Verstellung des Maschinenhauses rampenförmig an- und wieder abgefahren wird. Der Verstellantrieb ist hierzu als Drehstrom-Asynchronmotor ausgebildet, der mit einem Drehstrom variabler Frequenz angesteuert wird.

Aus DE 103 07 929 Al ist ein Windrichtungsnachführsystem bekannt, bei dem zum Schutz des Verstellmotors dieser über eine Sicherheitskupplung oder Rutschkupplung befestigt ist. Hintergrund hierzu ist, daß während der Nachführbewegung üblicherweise Haltebremsen in Eingriff stehen, um die erforderliche Dämpfung der Verstellbewegung zu gewährleisten. Die Antriebe sind daher so ausgelegt, daß sie die Haltekräfte der Bremse überwinden können. Trotz der Dämpfung durch die Bremsung kommt es im Betrieb der Windenergieanlage, bedingt durch hohe Giermomente, zu Lastspitzen an den Motoren, die zur Beschädigung oder zur Zerstörung der betroffenen Komponenten führen können. Zum Schutz der Verstellmotoren ist daher vorgesehen, daß deren Befestigung eine Reibfläche zum Festklemmen des Antriebs aufweist, wobei die Klemmkraft so dimensioniert ist, daß ab einer vorgegebenen mechanischen Belastung der Antrieb in seiner Befestigung bewegbar ist.

Es sind Windenergieanlagen bekannt, die als sogenannte Pitch-Anlagen den Anströmwinkel eines Rotorblattes durch eine Drehung des Rotorblatts um seine Längsachse verstellen können. Das Rotorblatt ist hierzu an einer Rotornabe verstellbar gelagert, wobei über einen oder mehrere Motoren die Ausrichtung des Rotorblatts um seine Längsrichtung verstellt wird. Im Sinne der vorliegenden Erfindung wird zwischen der Verstelleinrichtung für den Pitchantrieb und für die Windrichtungsnachführung nicht unterschieden. Beide Verstelleinrichtungen drehen die Position entweder des Maschinenhauses oder des Rotorblatts relativ zur seiner Drehachse. Bei dem Maschinenhaus entspricht die Drehachse in der Regel der Turmlängsachse, während bei dem Pitchantrieb die Drehachse mit der Längsachse des Rotorblatts zusammenfällt. Abgesehen von diesen geometrischen Unterschieden hinsichtlich der Dimensionierung besitzen die Verstellantriebe gleiche Funktionen und eine weitgehende konstruktiv ähnliche Ausgestaltung.

Der Erfindung liegt die Aufgabe zugrunde, eine Verstelleinrichtung für eine Windenergieanlage bereitzustellen, die einen einfachen Aufbau zuläßt und insbesondere es erlaubt, bei der Dimensionierung der Verstelleinrichtung eine Auslegung für zu hohe Drehmomente zu vermeiden.

Erfindungsgemäß wird die Aufgabe durch eine Windenergieanlage mit den Merkmalen gemäß dem unabhängigen Patentanspruch 1 gelöst. Weitere vorteilhafte Ausführungsformen, Ausgestaltungen und Aspekte der vorliegenden Erfindung ergeben sich aus den abhängigen Ansprüchen, der Beschreibung und den beiliegenden Zeichnungen.

Die erfindungsgemäße Windenergieanlage besitzt ein Maschinenhaus, dessen Azimutausrichtung durch eine Verstelleinrichtung motorisch einstellbar ist. Die Azimutausrichtung bestimmt die Richtung des Maschinenhauses und des Rotors. Die Verstelleinrichtung besitzt mindestens einen Motor vorzugsweise mit Getriebe und mindestens einer Haltebremse. Der Motor mit seinem Getriebe dient als Verstellantrieb, um die Position des Maschinenhauses im Wind auszurichten. Ebenfalls betrifft die Erfindung einen Verstellantrieb für ein Rotorblatt, mit dem das Rotorblatt um seine Längsrichtung verstellt werden kann. Auch hier können wieder ein Getriebe und eine Haltebremse vorgesehen sein.

Für den oder die Motor(en) ist eine Steuerung vorgesehen. Die Steuerung begrenzt das an dem Motor auftretende Drehmoment auf einen vorbestimmten Maximalwert. Bevorzugt ist als Motor ein Asynchronmotor vorgesehen. Der vorbestimmte Maximalwert ist dabei bevorzugt kleiner als das motorische Kippmoment des Motors. Erfindungsgemäß ist eine Steuerung für den Motor vorgesehen, die einen vorbestimmten Maximalwert für das Drehmoment bestimmt. Der besondere Vorteil dieser Steuerung besteht darin, daß das Getriebe lediglich bis zu dem Maximalwert für das Drehmoment auszulegen ist. Bei der Verwendung von Asynchronmaschinen kommt es bei Drehzahlen oberhalb der Synchrondrehzahl zu einer Feldschwächung der Asynchronmaschine, die eine Momentenreduzierung zur Folge hat. Mit der erfindungsgemäßen Steuerung kann durch den Einsatz eines stärkeren Motors bei einer über-synchronen Drehzahl eine geringere Feldschwächung erzielt werden. Die Verwendung des stärkeren Motors hat ein höheres Kippmoment zur Folge, das ohne Drehmomentbegrenzung das Getriebe überlasten würde. Erst mit der erfindungsgemäßen Drehmomentbegrenzung wird der Einsatz solcher Motoren möglich. Darüber hinaus wird eine E-Bremse - als Betriebsbremse - eingesetzt, die auf den Maximalwert des Drehmoments ausgelegt ist und dieses halten kann. Oberhalb des maximalen Haltemoments wird ein Durchrutschen der E-Bremse zugelassen.

Bevorzugt begrenzt die Steuerung das von dem Motor erzeugte Drehmoment während des Verstellvorgangs des Maschinenhauses oder des Rotorblatts auf einen ersten vorbestimmten Drehmomentwert. Zweckmäßigerweise ist der erste vorbestimmte Drehmomentwert kleiner oder gleich dem Maximalwert für das Drehmoment, für welches das Getriebe ausgelegt wurde.

Die Steuerung ist ebenfalls für das Halten des Maschinenhauses oder des Rotorblatts vorgesehen, wobei hierfür eine hydraulische und/oder eine E-Bremse geschlossen wird. Das erzeugte Drehmoment zum Halten durch die E-Bremse ist auf einen zweiten vorbestimmten Drehmomentwert begrenzt. Bevorzugt ist der zweite vorbestimmte Drehmomentwert wiederum kleiner oder gleich dem Maximalwert für das Drehmoment.

In einer bevorzugten Ausgestaltung der Verstelleinrichtung sind zwei oder mehr Asynchronmotoren vorgesehen, die über eine Steuerung gemeinsam angesteuert werden. Ebenfalls bevorzugt ist die Steuerung ausgebildet, um sowohl den oder die Asynchronmotor(en) also auch die elektrische Bremse und/oder die hydraulische Haltebremse anzusteuern. Die Haltebremse kann als hydraulische Bremse ausgeführt sein. Eine gemeinsame Steuerung für Verstellantrieb und Haltebremse erlauben es, diese zuverlässig aufeinander abgestimmt anzusteuern.

Um die Dynamik der Bewegung beim Verstellvorgang zu dämpfen, löst die Steuerung bevorzugt die hydraulische Bremse während des Verstellvorgangs nicht vollständig.

In einer bevorzugten Ausgestaltung ist das Getriebe des Motors für den Maximalwert ausgelegt und der Asynchronmotor mit seinem Kippmoment deutlich größer dimensioniert.

Eine bevorzugte Ausführungsform des erfindungsgemäßen Verfahrens wird nachfolgend anhand eines Beispiels für die Azimutausrichtung des Maschinenhauses näher erläutert.

Es zeigt:
- Fig. 1: eine Schnittansicht des Windrichtungsnachführsystems von der Seite,
- Fig. 2: eine schematische Ansicht für den Verlauf der Momente über der Drehzahl für eine Drehstrom-Asynchronmaschine und
- Fig. 3: eine schematische Ansicht für den Verlauf der Momente über der Drehzahl bei einer Ansteuerung mit begrenztem Maximalmoment.

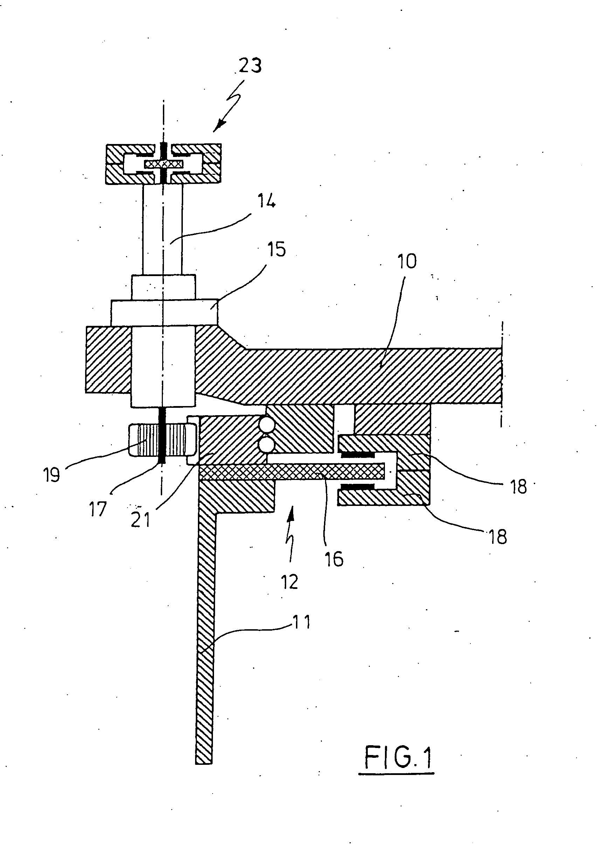

Fig. 1 zeigt einen Ausschnitt eines Maschinenträgers 10, der gondelseitig einen Generator und einen Antriebsstrang mit dem Rotor trägt. Der Maschinenträger 10 ist drehbar auf dem Turm 11 gelagert, wobei hierzu eine Drehverbindung 12 mit Außenverzahnung vorgesehen ist. In den Maschinenträger eingesetzt ist ein Drehstrom-Asynchronmotor 14, der mit einem Getriebe 15 versehen ist. Die Abtriebswelle 17 des Getriebes besitzt ein Ritzel 19, das von außen in einem außen verzahnten Azimutlager 21 kämmt. An dem Azimutlager ist außenseitig eine Bremsscheibe 16 angeordnet, die von Bremszangen 18 teilweise umgriffen ist. Die Bremszangen 18 sind entlang dem Umfang der Bremsscheibe 16 gleichmäßig verteilt und überdecken im wesentlichen einen Winkel von ungefähr 270°. Die Bremszangen 18 werden hydraulisch über eine zentrale Hydraulikeinheit betätigt, die gondelseitig auf dem Maschinenträger 10 vorgesehen ist. Die Bremszwangen 18 sind "fail safe" angeschlossen, so daß die Bremse lediglich bei ordnungsgemäßem Betrieb des Bremssystems geöffnet ist. Der Asynchronmotor 14 ist passiv belüftet und befindet sich auf der schnellen Welle eines mehrstufigen Planetengetriebes als Drehmomentwandler. Das Azimutsystem kann auch mehrere Drehstrom-Asynchronmotoren mit Getriebe besitzen.

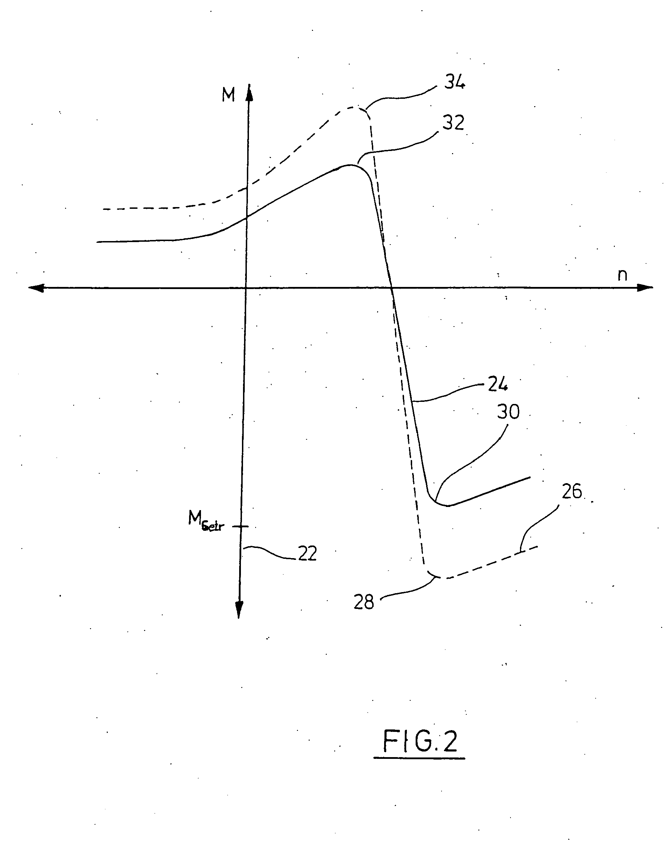

Fig. 2 zeigt in einer schematischen Ansicht den Drehmomentenverlauf über der Drehzahl für einen Drehstrom-Asynchronmotor. Der in Fig. 2 dargestellte Verlauf zeigt das von dem Motor erzeugte Drehmoment abhängig von der Drehzahl. Der Verlauf der Drehmoment/Drehzahlkennlinie für Drehstrom-Asynchronmotoren ist an sich bekannt. Zum Verständnis der Erfindung ist es wichtig, daß das vom Getriebe vorgegebene zulässige Maximalmoment die Auswahl des Drehstrommotors begrenzt. Ist beispielsweise das zulässige Maximalmoment auf einen Wert M_{Getr} 22 festgelegt, so ist hierdurch die Auswahl der Drehstrom-Asynchronmotoren für das Azimutsystem eingeschränkt. Es ist in dem dargestellten Beispiel aus Fig. 2 dann lediglich möglich, einen Motor mit der Kennlinie 24 auszuwählen. Bei diesem Motor liegt das motorische und das generatorische Kippmoment betragsmäßig unterhalb des maximal zulässigen Getriebemoments. Auf diese Weise bestimmt das Maximalmoment des Getriebes die Auswahl des Drehstrom-Asynchronmotors. Die Verwendung eines "stärkeren" Drehstrom-Asynchronmotors, der eine Momentenkennlinie 26 besitzt, scheidet somit aus, da dessen generatorisches Kippmoment 28 betragsmäßig größer ist als das maximal zulässige Moment für das Getriebe ist. Das generatorische Kippmoment 28 der Momentendrehzahlkennlinie 26 und das generatorische Kippmoment 30 der Momentendrehzahlkennlinie 24 sind aber die maximal auftretenden Drehmomente, bei dem beispielsweise die Antriebe von einer Windböe in den Übersynchronbereich getrieben werden. Da das Azimutverstellsystem der Windenergieanlage aber auch für diesen Lastfall auszulegen ist, ergeben sich hohe Anforderungen für die maximalen Momente des Getriebes. Die motorischen Kippmomente 32 und 34 der dargestellten Drehstrom-Asynchronmotoren sind dabei wie üblich kleiner als die generatorischen Kippmomente 30 bzw. 28.

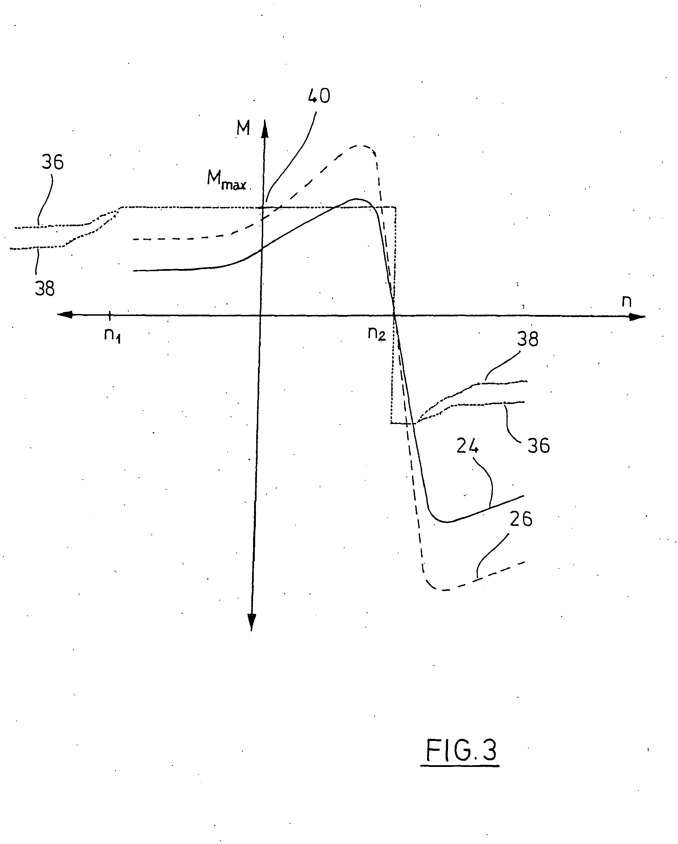

Fig. 3 zeigt im Vergleich zu den bekannten Momentendrehzahlkennlinien 24, 26 die entsprechenden Momentenkennlinien 36, 38 bei der Ansteuerung gemäß der Erfindung. Im Gegensatz zu den in Figur 2 eingezeichneten Drehmomenten ist hier auch bei entgegengesetzter Drehzahl der Betrag des Drehmoments dargestellt. Wie in Fig. 3 ersichtlich wird für Drehzahlen aus dem Bereich zwischen n1 und n2 das Drehmoment begrenzt. Für darüber hinausgehende Drehzahlen, d.h. für Drehzahlen kleiner als n1 und Drehzahlen größer als n2, wenn man die Drehrichtung bei der Drehzahl berücksichtigt, fallen die Drehmomente ab. Dies liegt an der Dimensionierung des Drehstrom-Asynchronmotors und entspricht den auch in den Kennlinien 24 und 26 dargestellten Feldschwächungsbereichen, in denen das Moment abfällt.

Wie aus Fig. 3 deutlich ersichtlich, ist der Abfall der Drehmomente für Drehzahlen außerhalb des Intervalls (n1, n2) bei der Kennlinie 36 deutlich schwächer als bei der Kennlinie 38, d.h. es kann über einen größeren Bereich für die Drehzahl ein hohes Antriebsmoment aufgebaut werden. Da das größte Moment auf das Maximalmoment Mₘₐₓ begrenzt ist, kann auch das Getriebe auf das Maximalmoment Mₘₐₓ ausgelegt sein, wobei eventuell ein Sicherheitsfaktor zu berücksichtigen ist. Trotz der begrenzten Auslegung des Getriebes kann dann ein Drehstrom-Asynchronmotor eingesetzt werden, der in bestimmten Drehzahlbereichen deutlich größere Drehmomente als das maximale Drehmoment Mₘₐₓ erzeugen kann, der aber durch die Ansteuerung über den Frequenzumrichter begrenzt wird. Der Vorteil an solchen Drehstrom-Asynchronmotoren ist, daß im Bereich der Feldschwächung das Moment nicht in dem Maße abfällt wie bei einem Drehstrom-Asynchronmotor, dessen generatorisches Kippmoment dem maximalen zulässigen Kippmoment entspricht. Bei herkömmlichen Azimutsystemen nach dem Stand der Technik ist eine Elektrobremse derart ausgelegt, daß durch wiederholtes Durchrutschen der E-Bremse diese und/oder benachbarte Komponenten beschädigt werden. Vor diesem Hintergrund sind bekannte Azimutsysteme derart dimensioniert, daß sie theoretisch auch bei Extremlastfällen selten oder gar nicht rutschen. Bei der Erfindung wird durch die Auslegung des Getriebes auf ein Maximalmoment bereits bei niedrigen Drehmomentwerten ein Durchrutschen der Elektrobremse zugelassen. Die dabei entstehende Bremsleistung wird in Form von Wärme an die Umgebung abgeleitet.

Auch für den Pitchantrieb kann der vorstehend beschriebene Drehstrom-Asynchronmotor und ein entsprechendes Getriebe entsprechend ausgelegt werden.

## Patentansprüche

1. Windenergieanlage mit einem Maschinenhaus und einem Rotor mit mindestens einem um seine Längsachse verstellbaren Rotorblatt, wobei eine Verstelleinrichtung vorgesehen ist, über die eine Azimutausrichtung des Maschinenhauses oder eine Pitchausrichtung des mindestens einen Rotorblatts motorisch einstellbar ist, die Verstelleinrichtung weist mindestens einen Motor (14) auf,
**dadurch gekennzeichnet, daß**
eine Steuerung für den Motor (14) vorgesehen ist, die das auftretende Moment an dem Motor auf einen vorbestimmten Maximalwert (Mₘₐₓ) (40) begrenzt.

2. Windenergieanlage nach Anspruch 1, **dadurch gekennzeichnet, daß** als Motor ein Asynchronmotor vorgesehen ist.

3. Windenergieanlage nach Anspruch 1 oder 2, **dadurch gekennzeichnet, daß** eine Verstelleinrichtung für die Azimutausrichtung des Maschinenhauses vorgesehen ist.

4. Windenergieanlage nach einem der Ansprüche 1 bis 3, **dadurch gekennzeichnet, daß** eine Verstelleinrichtung für die Pitchausrichtung des mindestens einen Rotorblatts vorgesehen ist.

5. Windenergieanlage nach einem der Ansprüche 1 bis 4, **dadurch gekennzeichnet, daß** die Steuerung für den Verstellvorgang das von dem Motor erzeugte Drehmoment auf einen ersten vorbestimmten Drehmomentwert begrenzt.

6. Windenergieanlage nach Anspruch 5, **dadurch gekennzeichnet, daß** der erste vorbestimmte Drehmomentwert kleiner oder gleich dem Maximalwert (Mₘₐₓ) (40) für das Drehmoment ist.

7. Windenergieanlage nach einem der Ansprüche 1 bis 6, **dadurch gekennzeichnet, daß** eine Elektrobremse (23) für das Halten des Maschinenhauses und/oder der Pitchausrichtung des Rotorblatts vorgesehen ist, die ein auftretendes Drehmoment an dem Getriebe auf einen zweiten vorbestimmten Drehmomentwert begrenzt.

8. Windenergieanlage nach Anspruch 7, **dadurch gekennzeichnet, daß** der zweite vorbestimmte Drehmomentwert kleiner oder gleich dem Maximalwert (Mₘₐₓ) für das Drehmoment ist.

9. Windenergieanlage nach einem der Ansprüche 1 bis 8, **dadurch gekennzeichnet, daß** eine Steuerung für zwei oder mehr Motoren vorgesehen ist.

10. Windenergieanlage nach einem der Ansprüche 1 bis 9, **dadurch gekennzeichnet, daß** die Steuerung sowohl den oder die Motor(en) als auch eine Haltebremse (16, 18) ansteuert.

11. Windenergieanlage nach Anspruch 10, **dadurch gekennzeichnet, daß** die Steuerung für den Verstellvorgang die Haltebremse (16, 18) nicht vollständig löst.

12. Windenergieanlage nach einem der Ansprüche 2 bis 11, **dadurch gekennzeichnet, daß** der Asynchronmotor derart ausgelegt ist, daß der Betrag seines Kippmoments größer als der vorbestimmte Maximalwert (Mₘₐₓ) ist.
